# EUROPÄISCHE PATENTSCHRIFT

(11) **EP 0 343 661 B1**
(45) Veröffentlichungstag und Bekanntmachung des Hinweises auf die Patenterteilung: **03.02.1993**
(21) Anmeldenummer: 89109438.5
(22) Anmeldetag: 24.05.1989
(51) Int. Cl.: B23P 23/00, B23K 26/00, B21D 28/00

(54) **Verfahren und Vorrichtung zum Herstellen von verschweissten Stanzteilen**
Method and apparatus for making welded punched products
Procédé et dispositif de fabrication de pièces poinçonnées soudées

(30) Priorität: 27.05.1988 CH 2023/88
(43) Veröffentlichungstag der Anmeldung: 29.11.1989
(73) Patentinhaber: BRUDERER AG, CH-9320 Frasnacht-Arbon (CH)
(72) Erfinder: Hellwig,Waldemar, CH-9320 Arbon (CH); Landtwing,Josef, CH-6300 Zug (CH)
(74) Vertreter: Blum, Rudolf Emil Ernst

(56) Entgegenhaltungen:
- FR-A- 2 435 981
- PATENT ABSTRACTS OF JAPAN, Band 10, Nr. 329 (E-452)[2385], 8 November 1986; & JP-A-61 135 348 (TOSHIBA CORP.) 23-06-1986
- IDEM

## Beschreibung

Die vorliegende Erfindung betrifft ein Verfahren zum Herstellen von mindestens zwei miteinander verbundenen Stanzteilen (Anspruch 1) sowie eine Vorrichtung zur Durchführung des Verfahrens (Anspruch 7).

Eine bekannte Verbindungsart zweier Werkstoffe innerhalb einer Stanzmaschine ist das Kontaktschweissen (z.B. System CONTRAP). Hierbei werden vorgestanzte Kontakte mit vom Profildraht abgetrennten Teilen mittels Widerstand-Schweissung verbunden. Diese Schweissung erfordert verhältnismässig viel Energie. Die Stanzfolge ist auf ca. 400 Hübe/Minute beschränkt.

Ein anderes Verfahren ist mit dem Begriff FASTEC® bekannt, das von der KURODA PRECISION INDUSTRIES LTD entwickelt wurde. Mit diesem Verfahren können die einzelnen gestanzten Stanzteile im Stanzwerkzeug miteinander verbunden werden. Diese Verbindung erfolgt dabei mittels Vertiefungen oder dergleichen, so dass die Stanzteile ineinandergedrückt oder verkrallt werden. Dieses Verfahren wird insbesondere zur Herstellung von Blechplaketen z.B. für Rotore und Statore angewendet. Ein derartiges Verfahren ist aus der DE-A 32 03 123 bekannt.

Bei diesen Verfahren werden sämtliche Arbeitsvorgänge innerhalb eines Folgewerkzeuges mit mehreren Einzelstempeln durchgeführt. Als nachteilig erweist sich bei diesen Verfahren, dass
- die durchschnittlichen Stanzgeschwindigkeiten mit 3-400 Hüben/min als klein zu bewerten sind,
- das zur Herstellung solcher Stanzteile benötigte Werkzeug kompliziert im Aufbau und teuer in der Herstellung ist, und
- die durch die örtlich begrenzte Verbindung der Stanzteile, diese sich verformen können, so dass die Stanzteile nicht satt aufeinander liegen und deshalb nicht zu einem Stapel zusammengefasst werden können.

Aus der DE-A-28 39 928 ist bekannt, in einem Folgewerkzeug neben den Modulen für das Stanzen, Lochen, Biegen, usw. jeweils ein Modul zum Zuführen von Teilen und ein Modul zum Verbinden der gestanzten Teile mittels Laserschweissen vorzusehen.

Der Nachteil dieses Verfahrens besteht darin, dass das Folgewerkzeug mit vom Stanzvorgang unabhängigen Arbeitsvorgängen belastet wird.

In den JP-A 61-135 348 die den nächstliegenden Stand der Technik beschreibt ist eine Stanzvorrichtung mit einer Lichtstrahl-Schweissvorrichtung beschrieben, um in einer Stanzfolge gestanzte Rotorbleche im Zuge des letzten Stanzvorganges zu verschweissen. Die Stanzvorrichtung ist als Folgewerkzeug ausgebildet. Die letzte Station des Folgewerkzeuges ist mit einer Bremseinrichtung versehen, welche das Paketieren der Rotorbleche erlaubt. Das Paketieren erfolgt mit Einbezug eines Lasers, um die Rotorbleche zu verschweissen. Die Schweissvorrichtung enthält eine Laserquelle und eine Fokussiereinrichtung. Die Fokussiereinrichtung ist am Werkzeugoberteil so montiert, dass der Laser senkrecht zur Oberfläche des Rotorbleches auf eine vorbereitete Schweissstelle gerichtet ist. Die Verschweissung des während des Stanzvorganges gestanzten Rotorbleches mit dem vorher gestanzten Rotorblech erfolgt im unteren Totpunkt U.T., wenn das Rotorblech auf den in der Bremseinrichtung gehaltenen Blechstapel gepresst wird.

Als nachteilig erweist sich bei dieser Vorrichtung, dass
- die Vorbereitung der Schweissstelle hohe Anforderungen an das Stanzwerkzeug stellt,
- durch das Verlaufen und teilweise Verdampfen der Schmelze an der Oberfläche des oberen Rotorbleches eine Hohlstelle entsteht, die sich mit zunehmender Pakethöhe vergrössert und so mit zunehmender Pakethöhe zumindest zu unsicheren Verbindungen führt,
- nur im unteren Umkehrpunkt des Werkzeugoberteiles geschweisst werden kann, wobei zur Erstarrung der Schmelze die zu verschweissenden Rotorbleche in Ruhe unter Druck gehalten werden müssen, was einen grösseren apparativen Aufwand zur Folge hat,
- mehr Energie für den Schweissvorgang benötigt wird,
- ein Verschweissen von dünn beschichteten bzw. ölbenetzten Blechen nicht möglich ist, und
- die Fokussiereinrichtung am Werkzeugoberteil angeordnet ist, was die Fokussierung des Lasers erschwert.

Ziel der Erfindung ist es, die angegebenen Nachteile zu vermeiden.

Der Erfindung liegt die Aufgabe zugrunde, ein Verfahren zum Herstellen von mindestens zwei miteinander verbundenen Stanzteilen zu schaffen, mit welchem die Stanzteile unlösbar verbunden werden, die Haltekraft wesentlich gesteigert und die Massgenauigkeit der verbundenen Stanzteile zueinander verbessert wird.

Diese Aufgabe wird erfindungsgemäss durch die Merkmale des Patentanspruches 1 gelöst.

Die damit erreichbaren Vorteile sind im wesentlichen darin zu sehen, dass die Stanzgeschwindigkeit gesteigert werden kann und die Einwirkung der Verbindung auf die Form der Stanzteile auf ein Minimum verringert werden kann.

Bei einer bevorzugten Ausführungsform des Verfahrens, bei dem die Stanzteile zu einem Stapel zusammengefasst werden, werden benachbarte Stanzteile im Stapel im Bereich der aufeinanderliegenden Kante miteinander verschweisst.

Die sich daraus ergebenden Vorteile sind darin zu sehen, dass die Güte der Verbindung verbessert wird, dass die Stapelung genau übereinander im Stanzwerkzeug erfolgt, wodurch separate bekannte Stapeleinrichtungen entfallen, und dass die Stanzfolge verkürzt werden kann.

Eine Vorrichtung zur Durchführung des Verfahrens ist durch den Anspruch 7 gekennzeichnet.

Die Vorrichtung hat die Vorteile, dass das Stanzwerkzeug vereinfacht und die Erhöhung der Hubfrequenz der Stanzpresse ermöglicht wird. Ferner ist es von Vorteil, dass die Fokussiereinrichtung vom Stanzwerkzeug unabhängig an der Maschine angeordnet werden kann, wodurch die Einsatzmöglichkeiten vergleichsweise grösser sind.

Im folgenden wird die Erfindung anhand der beiliegenden Zeichnungen näher erläutert.

Es zeigen:
Figuren 1 bis 4 schematisch dargestellte Anwendungsformen des erfindungsgemässen Verfahrens,
Figur 5 eine schematisch dargestellte Ausführungsform einer erfindungsgemässen Vorrichtung zum Herstellen von Blechpaketen aus Elektroblech,
Figur 6 eine Einzelheit der in Figur 5 gezeigten Vorrichtung im grösseren Massstab, und
Figur 7 eine schematische Darstellung des zeitlichen Ablaufs bei der Herstellung von Blechpaketen.

Beim hier in Rede stehenden Verfahren werden die Stanzteile innerhalb der Stanzfolge mittels Lichtstrahl-Schweissung verschweisst. Die Stanzfolge ist abhängig vom zu stanzenden Stanzteil und kann im einfachsten Fall aus einem einzigen Stanzvorgang bestehen. Die Abfolge des Schweissvorganges wird durch die Stanzvorrichtung vorgegeben, z.B. durch eine mit der Exzenterwelle der Stanzvorrichtung gekoppelte Kodierscheibe. Sind zwei Stanzteile zu verschweissen, so erfolgt die Schweissung erst mit dem zweiten Stanzvorgang und die Stanzteile müssen sich in einer Ruhestellung befinden.

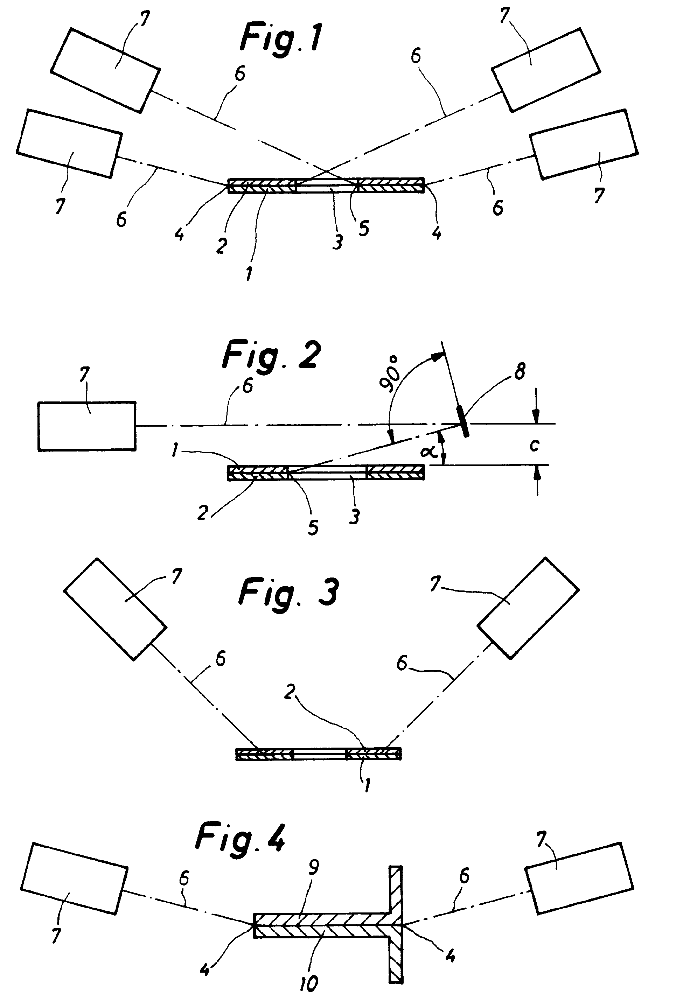

In den Figuren 1 bis 4 sind verschiedene Anwendungsformen des erfindungsgemässen Verfahrens dargestellt, wobei für gleiche Elemente gleiche Bezugszahlen zur Kennzeichnung verwendet werden.

Bei der in Figur 1 gezeigten Anwendungsform weisen die Stanzteile 1 und 2 eine Ausnehmung 3 auf und können an der Aussenkante 4 und/oder an der durch die Ausnehmung 3 gebildeten Kanten 5 mittels Laserstrahlen 6 aus Lasereinrichtungen 7 verschweisst werden.

Gegenüber der in Figur 1 gezeigten Anwendungsform wird gemäss Figur 2 der Laserstrahl 6 über ein Reflexionsmittel 8, z.B. einen Spiegel auf die zu verschweissende Stelle gerichtet.

Wie Figur 4 zeigt, werden bei einer Anwendungsform zwei Winkelprofile 9 und 10 verschweisst.

In diesem Zusammenhang wird darauf hingewiesen, dass das Verfahren nicht auf diese Anwendungsformen beschränkt ist.

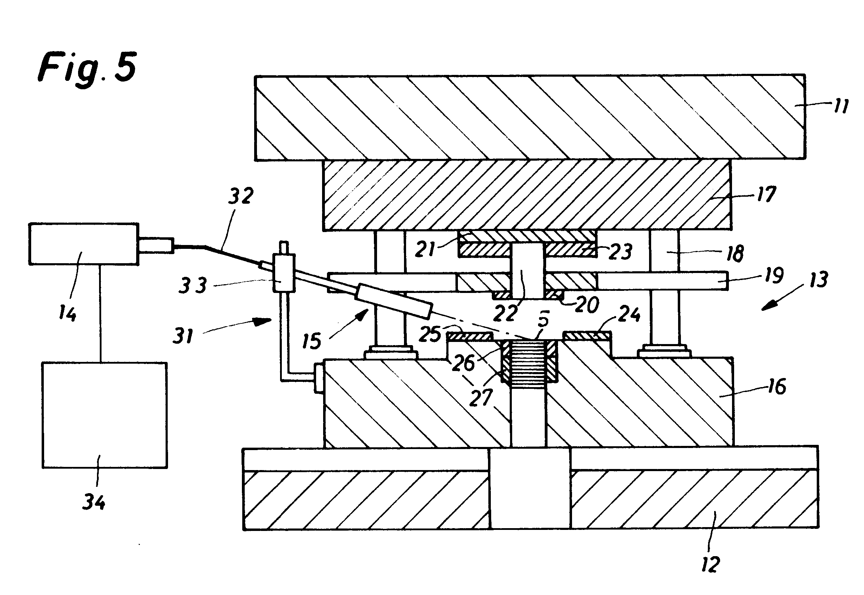

Wie die Figur 5 zeigt, umfasst eine Vorrichtung zur Durchführung des vorstehend beschriebenen Verfahrens eine Stanzpresse mit einem Stössel 11 und einen Tisch 12, ein Stanzwerkzeug 13 und eine Laser-Quelle 14 mit einer Fokussiereinrichtung 15.

Auf dem Pressentisch 12 ist das Stanzwerkzeug 13 auf bekannte Art und Weise montiert. Das Stanzwerkzeug 13 ist abhängig vom zu stanzenden Teil ausgebildet und umfasst bekanntlich einen Werkzeugunterteil 16, einen Werkzeugoberteil 17, Führungssäulen 18 für das Werkzeugoberteil, die am Werkzeugunterteil montiert sind, eine Halteplatte 19 mit einem Abstreifer 20, die an den Führungssäulen geführt ist, eine Druckplatte 21, einen Stempel 22 und eine Stempelhalteplatte 23, die am Werkzeugoberteil 17 montiert sind, sowie Führungsplatten 24, 25 für das Materialband (nicht dargestellt) und eine Matrize 26, die im Werkzeugunterteil 16 montiert sind.

Am Unterwerkzeug 16 ist eine Vorrichtung 31 zum Halten und Verstellen der Fokussiereinrichtung 15 der Laser-Einrichtung angeordnet. Die Fokussiereinrichtung 15 ist über ein Lichtleiterkabel 32 mit der Laser-Quelle 14 verbunden. Die Laser-Quelle 14 ist mit Vorteil ein gepulster Laser, dessen Strahlenquelle ein Glasstab oder YAG-Stab ist. Um die Fokussiereinrichtung 15 einzustellen, ist die Vorrichtung 31 mit einem Verstellglied 33 versehen. Beim vorstehend beschriebenen Beispiel ist ein Laser mit einem Strahlenteiler zum Schweissen an mehreren Stellen vorgesehen, wie z.B. in Figur 2 dargestellt ist. Es ist aber auch möglich, zwei Fokussiereinrichtungen 15 vorzusehen, die einander gegenüberliegend jeweils an einer Vorrichtung 31 gehalten sind.

Zur Einstellung des Laserstrahles kann eine Beobachtungseinrichtung vorgesehen werden, die mit der Fokussiereinrichtung gekoppelt ist. Neben der vorstehend beschriebenen getrennten Anordnung von Laser-Quelle 14 und Fokussiereinrichtung 15 ist es auch möglich, eine Laser-Einrichtung mit integrierter Fokussier- und Beobachtungseinrichtung anzuwenden.

Die Schweisseinrichtungen 7 werden durch eine Steuereinrichtung 34 gesteuert. Die Steuereinrichtung enthält eine Kodierscheibe, die mit der Exzenter-Welle der Stanzpresse mechanisch verbunden ist, eine Abtasteinrichtung, die mit der Kodierscheibe zusammenwirkt, und einen Steuerschaltkreis, der die Signale aus der Abtasteinrichtung empfängt und Steuersignale zur Durchführung der entsprechenden Funktion innerhalb des Vorgangs abgibt.

Unterhalb der Matrize 26 ist eine Bremseinrichtung 27 montiert, mit der die einzelnen Stanzteile als Paket ausgegeben werden können.

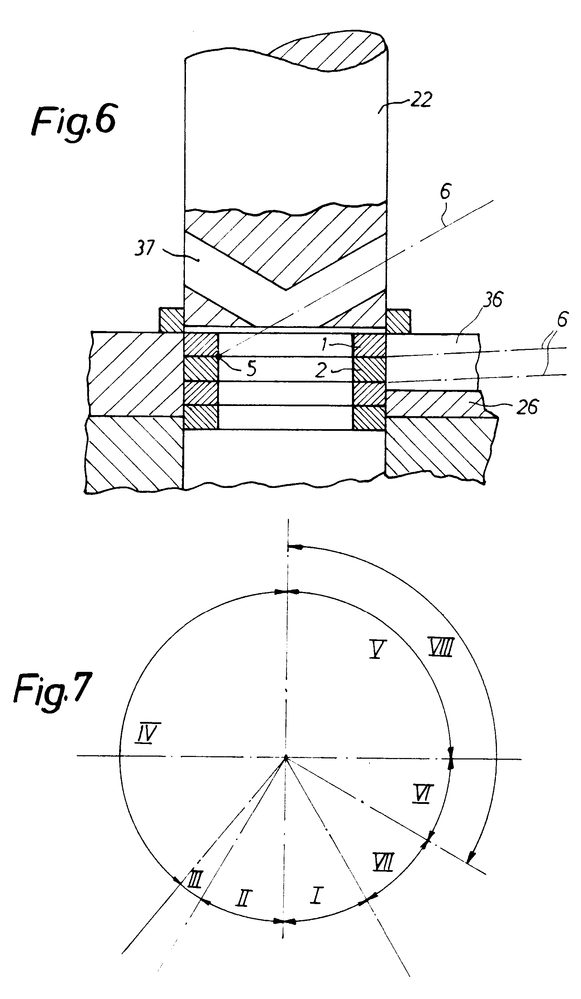

Wie Figur 6 zeigt, sind in der Matrize 26 und folglich auch im Werkzeugunterteil Ausnehmungen 36 und im Stempel 22 Löcher 37 vorgesehen, um den Laserstrahl 6 auf die zu verschweissenden Stanzteile 1, 2 zu richten.

Eine bevorzugte Ausführungsform des Verfahrens betrifft die Herstellung von Blechpaketen aus Elektroblech z.B. für Rotore, Statore und Trafos. Die Figur 7 zeigt den Ablauf bei diesem Verfahren in Abhängigkeit der Exzenter-Wellen-Rotation.

Wie Figur 7 zeigt, ist der Schneidvorgang I beim Erreichen des unteren Totpunktes UT beendet. Anschliessend erfolgt das Ausfahren II des Stempels. Im Bereich des unteren Totpunktes UT kann der Laserstrahl 6 auf die äussere bzw. innere Kante 4 bzw. 5 gerichtet werden, wenn der Stempel 22 bzw. die Matrize 26 mit Langlöchern 37, 36 versehen ist. Bei einem Stempel 22 ohne Langlöcher erfolgt der Einsatz des Laserstrahles 6 bei III. Daran anschliessend wird die Schweissung IV durchgeführt, deren Abschluss vor oder mit dem oberen Totpunkt OT erfolgen kann. Unmittelbar nach diesem Punkt setzt der Bandvorschub V ein, dem ein Band-Klemmvorgang VI folgt. Während des Bandvorschubes V und dem Band-Klemmen VI erfolgt die Paketverdrehung VIII. Nach dem Band-Klemmvorgang VI wird durch Justierung VII des Fangstiftes der Schneidvorgang I vorbereitet, worauf ein neuer Zyklus beginnt.

Aus der vorstehenden Beschreibung ist ersichtlich, dass das erfindungsgemässe Verfahren den besonderen Vorteil bietet in einem belichigen Bewegungsabschnitt zwischen dem unteren und oberen Totpunkt einen Schweissovorgang durchführen zu Rämen.

Damit können Blechpakete hergestellt werden, deren Güte jener nach den bekannten Verfahren sowohl bezüglich der Laufeigenschaften und der elektrischen Eigenschaften sowie der Zusammenhangskraft weitgehend übertreffen, wobei insbesondere zu beachten ist, dass mit hoher Stanzgeschwindigkeit z.B. 800 Hübe/min gearbeitet werden kann, und dass die Stanzwerkzeuge eine wesentliche Vereinfachung erfahren.

## Patentansprüche

1. Verfahren zum Herstellen von mindestens zwei miteinander verbundenen Stanzteilen (1,2) die im Zuge eines Stanzvorganges an mindestens einer Stelle durch Lichtstrahlschweissung verschweisst werden, dadurch gekennzeichnet, dass die Stanzteile (1,2) innerhalb der Matrize (26) an den aufeinanderliegenden Kanten (4, (5) verschweisst werden, wobei der Lichtstrahl auf die Kanten 4, (5) gerichtet wird, und dass der Lichtstrahl auf die zu verschweissende Stelle (4) gerichtet wird, wenn der Stempel (22) eine Stellung zwischen unteren und oberen Totpunkt einnimmt.

2. Verfahren nach Anspruch 1, dadurch gekennzeichnet, dass die Stanzteile (1, 2) an einer der Aussenkante (4) verschweisst werden.

3. Verfahren nach Anspruch 1, dadurch gekennzeichnet, dass die Stanzteile (1, 2) an einer durch eine Ausnehmung (3) gebildeten Kanten (5) verschweisst werden.

4. Verfahren nach einem der Ansprüche 1 bis 3, wobei die Stanzteile zu einem Stapel zusammengefasst werden, dadurch gekennzeichnet, dass benachbarte Stanzteile im Stapel im Bereich der aufeinanderliegenden Kanten an mindestens zwei Schweissstellen miteinander verschweisst werden, die an gegenüberliegenden Stellen der Stanzteile vorgesehen sind.

5. Verfahren nach einem der Ansprüche 1 bis 4, dadurch gekennzeichnet, dass der Schweissvorgang an den Stellen gleichzeitig oder zeitlich versetzt durchgeführt wird.

6. Verfahren nach einem der Ansprüche 1 bis 5, dadurch gekennzeichnet, dass Stanzteile aus unterschiechlichen Werkstoffen miteinander verschweist werden.

7. Vorrichtung zur Durchführung des Verfahrens nach Anspruch 1, welche eine Stanzpresse (11, 12) mit einem Stanzwerkzeug (13) und eine Schweisseinrichtung (7, 14) mit einer gepulsten Laser-Einrichtung und einer Steuereinrichtung (34) enthält, die abhängig vom Ablauf des Stanzvorgangs der Presse gesteuert wird, dadurch gekennzeichnet, dass die Laser-Einrichtung (7) eine Fokussiereinrichtung (15) zum Einstellen des Laserstrahles aufweist, und dass die Steuereinrichtung (34) ein Nockenschaltwerk enthält, um die Laser-Quelle (14) in Abhängigkeit des Stanzhubes bzw. Stanzvorgangs zu steuern.

8. Vorrichtung nach Anspruch 7, dadurch gekennzeichnet, dass die Laser-Einrichtung (7) an der Stanzpresse (11, 12) oder an dem Stanzwerkzeug (13) montiert ist.

9. Vorrichtung nach Anspruch 7 oder 8, dadurch gekennzeichnet, dass die Fokussiereinrichtung (15) am Werkzeug-Unterteil (16) befestigt und über ein Lichtleiterkabel (32) mit der Laser-Quelle (14) verbunden ist.

10. Vorrichtung nach Anspruch 7, dadurch gekennzeichnet, dass eine Reflexionseinrichtung (8) vorgesehen ist, die am Stanzwerkzeug (13) befestigt und mit einem Kältemittel versorgbar ist.

11. Vorrichtung nach einem der Ansprüche 7 bis 10, dadurch gekennzeichnet, dass Mittel (31) zum Halten der Laser-Einrichtung (7) und zum Einstellen des Strahlenverlaufs vorgesehen sind.

## Claims

1. Method of producing at least two interconnected punched parts (1, 2) which in the course of a punching operation are welded together by light beam welding at at least one location, characterized in that the punched parts (1, 2) are welded within the bottom die (26) at superposed edges (4, 5), whereby the light beam is directed onto the edges (4, 5), and in that the light beam is directed onto the location (4) to be welded when the punch (22) attains a position between lower and upper dead center.

2. Method according to claim 1, characterized in that the punched parts (1, 2) are welded at one of the outer edges (4).

3. Method according to claim 1, characterized in that the punched parts (1, 2) are welded at edges formed by a recess (3).

4. Method according to one of the claims 1 to 3, whereby the punched parts are combined into a stack, characterized in that adjacent punched parts in the stack are welded together at the location of the superposed edges at at least two welding positions which are foreseen at opposite locations of the punched parts.

5. Method according to one of the claims 1 to 4, characterized in that the welding process at said locations is carried out simultaneously or staggered regarding time.

6. Method according to one of the claims 1 to 5, characterized in that punched parts of differing materials are welded together.

7. Apparatus for practicing the method according to claim 1, having a punch press (11, 12) with a punching tool (13) and a welding device (7, 14) with a pulsed laser-device and a control device (34) which is controlled in dependence from the course of the punching operation of the press, characterized in that the laser-device (7) comprises a focussing device (15) for adjusting the laser beam, and that the control device (34) includes a camshaft gear in order to control the laser source (14) in dependence from the punching stroke or punching operation, resp.

8. Apparatus according to claim 7, characterized in that the laser device (7) is mounted at the punch press (11, 12) or at the punching tool (13).

9. Apparatus according to claim 7 or 8, characterized in that the focussing device (15) is mounted at the tool lower part (16) and is connected to the laser source (14) via a light transmitting cable (32).

10. Apparatus according to claim 7, characterized in that a reflection device (8) is foreseen which is mounted at the punching tool (13) and can be supplied with a cooling agent.

11. Apparatus according to one of the claims 7 to 10, characterized in that means (31) for supporting the laser-device (7) and for adjusting of the course of the beam are foreseen.

## Revendications

1. Procédé pour la fabrication d'au moins deux pièces estampées (1, 2) reliées entre elles, qui au cours d'une opération d'estampage sont soudées par radiation laser en au moins un point, caractérisé en ce que les pièces estampées (1, 2) sont soudées à l'intérieur de la matrice (26) par leurs arêtes (4, 15) empilées les unes sur les autres, le rayon lumineux étant orienté sur les arêtes (4, 15), et en ce que le rayon lumineux est orienté sur l'endroit à souder (4) lorsque le poinçon (22) se met dans une position intermédiaire entre le point mort inférieur et supérieur.

2. Procédé selon la revendication 1, caractérisé en ce que les pièces estampées (1, 2) sont soudées par l'une des arêtes extérieures (4).

3. Procédé selon la revendication 1, caractérisé en ce que les pièces estampées (1, 2) sont soudées à une arête (5) formée par un alésage (3).

4. Procédé selon l'une quelconque des revendications 1 à 3, les pièces estampées étant mises sur une pile, caractérisé en ce que des pièces estampées voisines dans la pile sont soudées entre elles, dans la zone des arêtes empilées les unes sur les autres, par au moins deux endroits de soudure, lesquels sont prévus à des endroits opposés sur les pièces estampées.

5. Procédé selon l'une quelconque des revendications 1 à 4, caractérisé en ce que l'opération de soudage aux différents endroits est effectuée simultanément ou décalée dans le temps.

6. Procédé selon l'une quelconque des revendications 1 à 5, caractérisé en ce que des pièces estampées de différents matériaux sont soudées entre elles.

7. Dispositif pour l'exécution du procédé selon la revendication 1, comprenant une presse à estamper (11, 12) avec un outil d'estampage (13), un dispositif de soudage (7, 14) avec un dispositif laser pulsé et un dispositif de commande (34), lequel est commandé en fonction du déroulement de l'opération d'estampage de la presse, caractérisé en ce que le dispositif laser (7) comporte un dispositif de focalisation (15) pour le réglage du rayon laser, et en ce que le dispositif de commande (34) comprend un mécanisme de commutation à came pour commander la source laser (14) en fonction de la course d'estampage et/ou de l'opération d'estampage.

8. Dispositif selon la revendication 7, caractérisé en ce que le dispositif laser (7) est monté sur la presse à estamper (11, 12) ou sur l'outil d'estampage (13).

9. Dispositif selon la revendication 7 ou la revendication 8, caractérisé en ce que le dispositif de focalisation (15) est fixé à la partie inférieure (16) de l'outil et relié à la source laser (14) par l'intermédiaire d'un câble à fibres optiques (32).

10. Dispositif selon la revendication 7, caractérisé en ce qu'il est prévu un dispositif de réflection (8), lequel est fixé sur l'outil d'estampage (13) et peut être alimenté par un agent frigorigène.

11. Dispositif selon l'une quelconque des revendications 7 à 10, caractérisé en ce qu'il est prévu des moyens (31) pour supporter le dispositif laser (7) et pour régler l'évolution des rayons.
